# EUROPEAN PATENT APPLICATION

(11) **EP 4 331 747 A1**
(43) Date of publication of application: **06.03.2024**
(21) Application number: 22193183.5
(22) Date of filing: 31.08.2022
(51) Int. Cl.: B22F 10/28, B29C 64/10, B33Y 10/00, B33Y 50/02, G06T 19/00, G06F 113/10

(54) **A METHOD FOR GENERATING A DATA PACKAGE FOR PRODUCING A COMPONENT BY AN ADDITIVE MANUFACTURING DEVICE, COMPUTER PROGRAM PRODUCT, COMPUTER-READABLE STORAGE MEDIUM, ELECTRONIC COMPUTING DEVICE AS WELL AS AN ADDITIVE MANUFACTURING DEVICE**

(71) Applicant: Siemens Aktiengesellschaft, 80333 München (DE)
(72) Inventor: Heinrichsdorff, Frank, 14513 Teltow (DE)
(74) Representative: Siemens Patent Attorneys

(57) **Abstract**

The invention relates to a method for generating a data package (14) for producing a component (16) by an additive manufacturing device (10) by an electronic computing device (12), comprising the steps of providing a digital model (20) of the component (16) for the electronic computing device (10), dividing the digital model (20) in at least two slices (22, 24, 26, 28, 30) for producing the component (16), parametrizing a build processor (32) of the electronic computing device (12) depending on a first slice (22) of the at least two slices (22, 24, 26, 28, 30), defining first data (34) for the data package (14) of the first slice (22), parametrizing the build processor (32) depending on a second slice (24) of the at least two slices (22, 24, 26, 28, 30), defining second data (36) for the data package (14) of the second slice (24), and generating the data package (14) depending on the first data (34) and the second data (36). Furthermore, the invention relates to a computer program product, to a computer-readable storage medium, to an electronic computing device (12) as well as to an additive manufacturing device (10).

## Description

The invention relates to a method for generating a data package for producing a component by an electronic computing device by an electronic computing device according to the pending claim 1. Furthermore, the invention relates to a computer program product, to a computer-readable storage medium, to an electronic computing device as well as to an additive manufacturing device.

From state of the art, it is known that a print preparation, for example, for a selective laser melting (SLM) typically consists of three steps. These steps are the provisioning of the component data, in particular so-called CAD-data, the parametrization of the build processor and the generation of the job file by the build processor. An evaluation of the job file, for example, by visional inspection and an appropriate slice view or an analysis regarding thermal problems by a path analysis software, requires the execution of the third step. Since the job file generation for typically several thousand layers or a slice takes several minutes, iterative changes of the build processor parameters to optimize the resulting job files are time consuming, and the resulting changes in the output are difficult to capture.

It is an object of the invention to provide a method, a computer program product, a computer-readable storage medium, an electronic computing device as well as an additive manufacturing device, by which a more efficient way for generating a data package for a component is provided.

This object is solved by a method, a computer program product, a computer-readable storage medium, an electronic computing device as well as an additive manufacturing device.

A first aspect of the invention relates to method for generating a data package for producing a component by an additive manufacturing device by an electronic computing device. A digital model of the component is provided for the electronic computing device. The digital model is at least divided in two slices for producing the component. A build processor of the electronic computing device is parametrized depending on at least a first slice or on all of the at least two slices. First data are defined for the data package of the first slice. The build processor is parametrized depending on a second slice of the at least two slices, and the second data for the data package are defined of the second slice. The data package is generated depending on the first data and the second data.

Therefore, according to the invention, the parametrization of the build processor and the data package, which may also be regarded to as a job file, generation are combined so that changes of a parameter are directly transferred to the build processor and lead to immediate recalculation of a selected slice. A slice may also be regarded to as a layer.

Therefore, the generation of the data package is reduced to the slices needed for fast evaluation and thus allows the fast evaluation of the build processor parameter changes. This makes interactive parameter optimization possible and is an efficient way for generating the data package for the component.

According to an embodiment, a parameter of the first slice and/or the second slice is adapted and the first data and/or the second data are adapted simultaneously. In particular, simultaneously means that after adapting the parameter of the first slice in the build processor, the electronic computing device is configured to defining the first data depending on the adaption of the parameter. In particular, this means that after the parametrization of the first slice, the generation or defining of the data are performed in a time sequence. In particular, this means that not the whole digital model is parametrized and then the data are generated and then the parametrization are adapted, the single slices are adapted in a time row.

According to another embodiment, the steps of the method are performed in a time sequence. This means that in a first time step, the build processor is parametrized for a first slice and in a second time step, the first data are defined. In a third time step, the build processor is parametrized depending on the second slice, and in a fourth time step, the second data are defined. If the component comprises more than two slices, the slices or groups of slices are parametrized and defined as mentioned to the first and the second slice.

According to another embodiment for parametrizing and defining data at least two central processing units are used in parallel. Therefore, it is necessary to modify the normally slice-based parallelization according to state of the art integration of the data package in such a way, that the performance gains through the use of several CPU cores also comes into play when only the one slice of the data package is calculated. Therefore, the one slice can be calculated in a fast and efficient way.

In another embodiment for each slice a path analysis is performed. In particular, the path analysis is established for each slice and a quality metric (e.g. derived from the slice temperature distribution) is determined. Since typically there is no slice interdependency in the path analysis, the path analysis for the calculated slice may also be performed directly afterwards, if necessary, so that an interactive evaluation of the build processor parametrization may be performed with respect, for example, to thermal problems.

In another embodiment, each slice is displayed on a display device of the electronic computing device. In particular, each slice is displayed in a slice view on the display device. In particular, the visualization of each slice is a vector illustration the slice viewer or displayed as a path analysis. According to this slice-view, each slice of the data package is displayed, wherein an interactive analysis may be performed.

In another embodiment, the component comprises a plurality of slices, wherein the data of the plurality of slices are generated in a temporal sequence. For example, the parametrization and data generation for the first slice, then for the second slice, and then for a third or further slice is performed. Therefore, components comprising a plurality of slices can be produced in an efficient way.

According to another embodiment, the additive manufacturing device is provided as a selective laser melting device.

Another aspect of the invention relates to a computer program product comprising program code means for performing a method according to the preceding aspect. Furthermore, the computer program product may also be regarded to as a computer program. Therefore, another aspect of the invention also relates to a computer readable storage medium comprising the computer program product according to preceding aspect.

A still further aspect of the invention relates to an electronic computing device for generating a data package for producing a component by an additive manufacturing device, wherein the electronic computing device is configured for performing a method according to the preceding aspect. In particular, the method is performed by the electronic computing device.

The electronic computing device comprises processors, circuits, in particular integrated circuits, and other electronic means, for performing the method.

A still further aspect of the information relates to an additive manufacturing device comprising at least the electronic computing device according to the preceding aspect.

According to an embodiment of the additive manufacturing device, the additive manufacturing device is a selective laser melting device.

For use cases or use situations, which may arise in the method, and which are not explicitly described here, it may be provided that, in accordance with the method, an error massage and/or a prompt for user feedback is output and/or a default setting and/or a predetermined initial state is set.

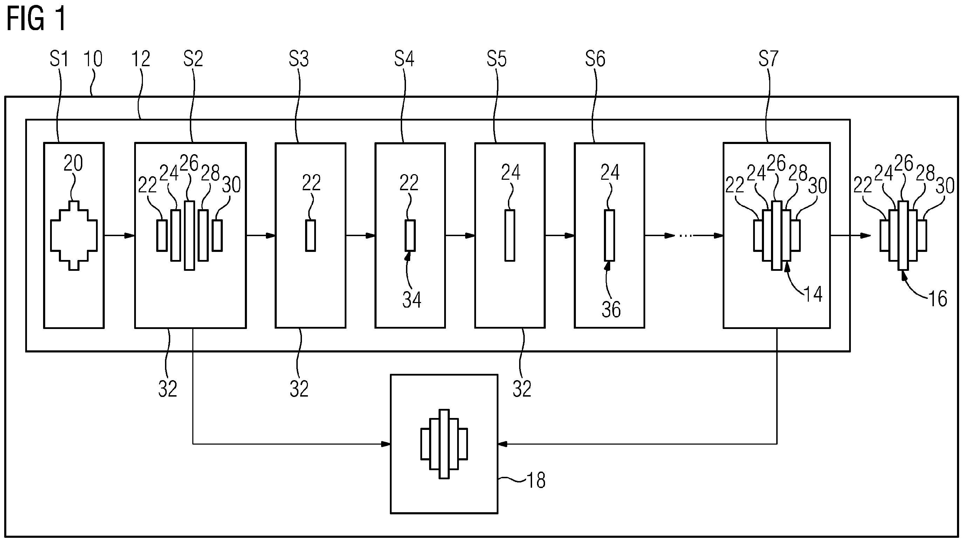

The invention is now described in a figure (FIG 1), which represents an embodiment of the invention.

Therefore, FIG 1 shows a schematic block diagram according to an embodiment of the additive manufacturing device comprising at least the electronic computing device.

In the figure same elements have the same reference signs.

FIG 1 shows a schematic block diagram according to an embodiment of an additive manufacturing device 10. In particular, the additive manufacturing device 10 is configured as a selective laser melting device.

The additive manufacturing device 10 comprises at least one electronic computing device 12, wherein the electronic computing device 12 is configured for generating a data package 14 for producing a component 16 by the additive manufacturing device 10. Furthermore, according to the shown embodiment, the electronic computing device 12 and/or the additive manufacturing device 10 may comprise a display device 18. In particular, FIG 1 shows a method for generating the data package 14 for the component 16. In a first step S1, a digital model 20 of the component 16 is provided by the electronic computing device 12

In a second step S2, a build processor 32 of the electronic computing device 12 divides the digital model 20 is into at least two slices 22, 24, 26, 28, 30 for producing the component 16. According to the embodiment shown in Fig. 1, the component 16 comprises five slices 22, 24, 26, 28, 30. In particular, the component 16 comprises a first slice 22, a second slice 24, a third slice 26, a fourth slice 28 and a fifth slice 30.

In a third step S3, the build processor 32 is parametrized depending on at least the first slice 22 of the at least two slices 22, 24, 26, 28, 30. In a fourth step S4, first data 34 for the data package 14 of the first slice 22 are defined. In a fifth step S5, the build processor 32 is parametrized depending on the second slice 24. In a sixth step S6, second data 36 for the data package 14 of the second slice 24 are defined. In a seventh step S7, the data package 14 is generated depending on the first data 34 and the second data 36.

In particular, FIG 1 shows that between the sixth step S6 and the seventh step S7, further steps may be computed, in particular for the third slice 26, the fourth slice 28 and the fifth slice 30. In particular, Fig. 1 shows, that the steps of the method are performed in a time sequence.

According to an embodiment, a parameter of the first slice 22 and/or the second slice 24 is adapted, and the first data 34 and/or the second data 36 are adapted simultaneously.

In particular, for parametrizing and defining data 34, 36 at least two central processing units are used in parallel, in particular of the electronic computing device 12. Furthermore, for each slice 22, 24, 26, 28, 30 a path analysis is performed. In particular, in the path analysis a quality metric (e.g derived from temperature) for each slice 22, 24, 26, 28, 30 during a melting process is determined.

Furthermore, FIG 1 shows, that each slice 22, 24, 26, 28, 30 (possibly together with the corresponding path analysis result)is displayed in a slice viewer on the display device 18, in particular the component on the display device 18 of the electronic computing device 12 is shown, in particular each slice 22, 24, 26, 28, 30 is displayed in a slice viewer on the display device 18.

In particular, FIG 1 shows that according to the invention, the parametrization of the build processor 32 and the data package 14, which may also be regarded to as job file, generation are combined so that changes to a parameter are directly transferred to the build processor 32 and lead to immediate recalculation of a selected slice 22, 24, 26, 28, 30.

For this purpose, it is necessary to modify the normally layer-based parallelization according to the state of the art in discretion of the data package 14 in such a way that the performance gained through the use of several CPUs cores also comes into play when only the one slice 22, 24, 26, 28, 30 of the data package is calculated. Because in visualization, for example, in a vector display in a slice viewer or output of the path analysis, only one slice 22, 24, 26, 28, 30 of the data package 14 is displayed anyway, the fast generation of a single slice 22, 24, 26, 28, 30 of the data package is sufficient of the interactive analysis. With conventional computation time around about one hour according to the state of the art for serval thousands of slices 22, 24, 26, 28, 30, an appropriately modified parallelization allows response times in the range of seconds for the build processor parameter changes. Since, also the path analysis typically each slice 22, 24, 26, 28, 30 is computed individually, if necessary, also the path analysis of the computed slice 22, 24, 26, 28, 30 may take place directly afterwards, so that an interactive evaluation of the build processor parametrization may take place regarding, for example, thermal problems.

### Reference signs

- 10: additive manufacturing device
- 12: electronic computing device
- 14: data package
- 16: component
- 18: display device
- 20: digital model
- 22: first slice
- 24: second slice
- 26: third slice
- 28: fourth slice
- 30: fifth slice
- 32: build processor
- 34: first data
- 36: second data
- S1 to S7: steps of method

## Claims

1. A method for generating a data package (14) for producing a component (16) by an additive manufacturing device (10) by an electronic computing device (12), comprising the steps of:
- providing a digital model (20) of the component (16) for the electronic computing device (10);
- dividing the digital model (20) in at least two slices (22, 24, 26, 28, 30) for producing the component (16);
- parametrizing a build processor (32) of the electronic computing device (12) depending on at least a first slice (22) of the at least two slices (22, 24, 26, 28, 30);
- defining first data (34) for the data package (14) of the first slice (22);
- parametrizing the build processor (32) depending on a second slice (24) of the at least two slices (22, 24, 26, 28, 30) ;
- defining second data (36) for the data package (14) of the second slice (24); and
- generating the data package (14) depending on the first data (34) and the second data (36).

2. A method according to claim 1, **characterized in that** a parameter of the first slice (22) and/or the second slice (24) is adapted and the first data (34) and/or the second data (36) are adapted simultaneously.

3. A method according to claim 1 or 2, **characterized in that** the steps of the method are performed in a time sequence.

4. A method according to any of the claims 1 to 3, **characterized in that**
for parameterizing and defining data (34, 36) at least two central processing units are used in parallel.

5. A method according to any of the claims 1 to 4, **characterized in that**
for each slice (22, 24, 26, 28, 30) a path analysis is performed.

6. A method according to claim 5, **characterized in that** in the path analysis a quality metric for each slice (22, 24, 26, 28, 30) during a melting process is determined.

7. A method according to any of the claims 1 to 6, **characterized in that**
each slice (22, 24, 26, 28, 30) is displayed on a display device (18) of the electronic computing device (12).

8. A method according to claim 7, **characterized in that** each slice (22, 24, 26, 28, 30) is displayed in slice viewer on the display device (18).

9. A method according to any of the claims 1 to 8, **characterized in that**
the component (16) comprises a plurality of slices (22, 24, 26, 28, 30), wherein the data (34, 36) of the plurality of slices (22, 24, 26, 28, 30) are generated in a temporal sequence.

10. A method according to any of the claims 1 to 9, **characterized in that**
the additive manufacturing device (10) is provided as a selective laser melting device.

11. A computer program product comprising program code means for performing a method according to any of claims 1 to 10.

12. A computer readable storage medium comprising the computer program product according to claim 11.

13. An electronic computing device (129 for generating a data package (14) for producing a component (16) by an additive manufacturing device (10), wherein the electronic computing device (12) is configured for performing a method according to any of claims 1 to 10.

14. An additive manufacturing device (10) comprising at least the electronic computing device (12) according to claim 13.

15. The additive manufacturing device (10) according to claim 14, **characterized in that**,
the additive manufacturing device (10) is a selective laser melting device.
